(19) Europäisches Patentamt
European Patent Office
Office européen des brevets

(11) **EP 3 049 223 B1**

(12) **FASCICULE DE BREVET EUROPEEN**

(45) Date de publication et mention
de la délivrance du brevet:
**31.10.2018 Bulletin 2018/44**

(51) Int Cl.:
**B28D 5/00** *(2006.01)*     **B28D 5/04** *(2006.01)*
**B23Q 17/09** *(2006.01)*

(21) Numéro de dépôt: **14776619.0**

(22) Date de dépôt: **23.09.2014**

(86) Numéro de dépôt international:
**PCT/EP2014/070267**

(87) Numéro de publication internationale:
**WO 2015/044145 (02.04.2015 Gazette 2015/13)**

(54) **PROCEDE ET DISPOSITIF DE DECOUPE FILAIRE D'UN MATERIAU**

VERFAHREN UND VORRICHTUNG ZUM DRAHTSÄGEN EINES MATERIALS

CUTTING PROCESS AND CUTTING DEVICE BY WIRE OF A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2013 FR 1359194**

(43) Date de publication de la demande:
**03.08.2016 Bulletin 2016/31**

(73) Titulaire: **Commissariat à l'Énergie Atomique et aux Énergies Alternatives**
**75015 Paris (FR)**

(72) Inventeurs:
• **SILLARD, Léo**
  **F-92240 Malakoff (FR)**
• **GARANDET, Jean-Paul**
  **92210 Saint Cloud (FR)**
• **PENOT, Jean-Daniel**
  **67000 Strasbourg (FR)**

(74) Mandataire: **Regimbeau**
**87 rue de Sèze**
**69477 Lyon Cedex 06 (FR)**

(56) Documents cités:
**EP-A1- 2 583 778      WO-A1-00/47383**
**WO-A1-2012/164848    CH-A5- 696 757**
**CN-U- 203 204 380**

EP 3 049 223 B1

**Description**

**DOMAINE DE L'INVENTION**

La présente invention concerne un procédé et un dispositif de découpe filaire d'un matériau de préférence fragile.

**ARRIERE PLAN DE L'INVENTION**

Les scies à fil sont utilisées dans de nombreux domaines, parmi lesquels peuvent être cités la découpe de matériaux semi-conducteurs (tels que du silicium) pour former des substrats, la découpe du bois et la découpe de la pierre.

Les scies à fil sont constituées d'un ou plusieurs fils libres ou sous forme de boucle mis en mouvement par un système de poulies.

La découpe est permise par les phénomènes d'abrasion entre le fil et le matériau à découper, éventuellement assistés par l'action d'un troisième corps.

Ce procédé est en outre généralement lubrifié par un fluide tel que de l'eau, du polyéthylène-glycol (PEG), un gel, etc.

Sans intention limitative, on s'intéresse ci-dessous plus précisément à la mise en forme du silicium pour applications photovoltaïques.

Les scies à fil sont en effet utilisées dans toutes les étapes de découpe mises en oeuvre pour passer d'un lingot aux substrats (ou « wafers » selon la terminologie anglo-saxonne) destinés à la fabrication des cellules photovoltaïques, à savoir successivement :

- le briquetage (« squaring » selon la terminologie anglo-saxonne), c'est-à-dire la découpe du lingot en briques de section normalisée ;
- l'éboutage (« cropping » selon la terminologie anglo-saxonne), qui consiste à ôter les parties supérieures et inférieures des briques contenant des précipités d'impuretés dues à la cristallisation non désirables pour les étapes de fabrication suivantes ;
- la découpe (« wafering » ou « slicing » selon la terminologie anglo-saxonne) des briques en substrats d'une épaisseur allant de 100 à 300 $\mu$m.

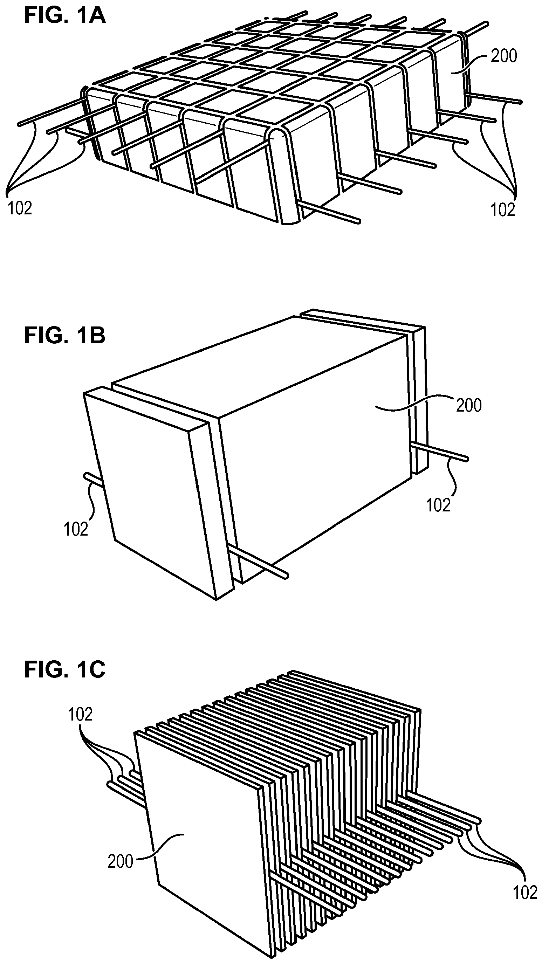

Ces opérations successives sont représentées respectivement aux figures 1A à 1C, le matériau à découper étant désigné par le repère 200 et le ou les fils de découpe étant désignés par le repère 102.

Eventuellement, les deux premières étapes de découpe (briquetage et éboutage) peuvent être effectuées sans découpe filaire, généralement avec une meule diamantée.

La découpe filaire peut se diviser en deux catégories principales selon le mode d'abrasion mis en jeu.

Un premier type de découpe est la découpe à abrasif libre, dans laquelle des grains d'abrasif (souvent du carbure de silicium) sont intégrés dans une solution (typiquement du polyéthylène-glycol (PEG)) formant un liquide de coupe appelé « slurry ».

Celui-ci est versé entre deux solides glissant l'un contre l'autre (en l'occurrence, un fil d'acier sur le matériau à découper).

Les grains d'abrasif sont mis en mouvement grâce au glissement des deux corps et abrasent la matière par de multiples micro-indentations (roulement des particules sur le matériau).

Il s'agit d'un cas d'abrasion dit « trois corps » (fil, grains abrasifs, matériau).

Le second type de découpe est la découpe à abrasif lié, dans laquelle des grains d'abrasif (en général, des diamants, d'où l'appellation courante « découpe au fil diamanté ») sont fixés sur la surface du fil et rayent le matériau à découper.

Il s'agit d'un cas d'abrasion dit « deux corps » (fil abrasif, matériau).

La découpe au fil à abrasif lié, qui est la technique préférée pour la découpe de silicium monocristallin, arrive sur le marché de la découpe du silicium pour application photovoltaïque.

Cette technique présente en effet un potentiel important en termes de performance de découpe par rapport à la technique d'abrasion à trois corps ou à abrasif libre : vitesses de coupe deux à trois fois supérieures, simplification de la technologie des scies, notamment concernant la lubrification ou l'intégration de module de recyclage des résidus de découpe.

La découpe du silicium représentant près de 10% du coût de production d'un module photovoltaïque, il est souhaitable d'optimiser cette nouvelle technologie.

Le principal obstacle au développement du fil à abrasif lié est son coût important - près de cent fois supérieur à celui du fil lisse utilisé dans la découpe au slurry.

La durée de vie du fil à abrasif lié est donc un des paramètres clefs pour que cette technologie devienne rentable.

En effet, un fil perd sa capacité à ôter de la matière au fur et à mesure des coupes.

Cela se traduit par la réduction des vitesses de découpe : le fil pénètre moins vite dans la matière et prend de plus en plus de flèche. Cela peut conduire à une vitesse d'abrasion quasiment nulle, s'il n'y a pas eu rupture du fil auparavant.

Les fabricants de fil à abrasif lié quantifient la durée de vie de leurs produits par une longueur de fil en km par m$^2$ découpé (correspondant à la surface de la section découpée par le fil).

Cette grandeur prend en compte principalement la perte de vitesse de découpe maximale admissible par un fil, mais reste une donnée empiriquement déterminée.

En pratique, selon les paramètres de découpe utilisés (vitesse de défilement du fil, vitesse de sa pénétration dans le matériau...), elle varie.

Le remplacement du fil usé n'est donc jamais optimisé par rapport à son état d'usure réel.

Dans le cas des fils libres (i.e. non bouclés), il existe par ailleurs un régime dit « back & forth » ou régime d'aller-retour.

Ce régime consiste à dérouler le fil dans un sens puis à le rembobiner dans l'autre de telle sorte qu'un point du fil effectue des aller-retours sur le matériau à découper.

Dans la plupart des cas, il existe un mode tel qu'à chaque cycle, une bobine élimine une certaine longueur de fil usé et une autre la remplace par du fil neuf pour garder une bonne capacité de coupe (typiquement cinq mètres pour 100 mètres de défilement).

Ce réglage est également effectué de façon empirique et est très difficile à optimiser de façon systématique.

Par ailleurs, la rupture reste sensiblement imprévisible.

La rupture peut être attribuée à une faiblesse du fil, aux hétérogénéités du matériau à découper ou encore à un mauvais choix des paramètres de découpe.

En particulier, le silicium pour applications photovoltaïques présente des inhomogénéités pouvant se ranger selon deux catégories :

- d'une part, les défauts locaux (comme des précipités de SiC ou de Si$_3$N$_4$) de dimensions millimétriques ou submill-limétriques, qui perturbent la découpe filaire, pouvant provoquer la rupture du fil ou créer des stries sur la surface découpée ;
- d'autre part, des hétérogénéités étendues (c'est-à-dire de l'ordre de plusieurs centimètres, voire une dizaine de centimètres) qui sont inhérentes au procédé de cristallisation des lingots : en premier lieu l'existence de plusieurs grains (dans le cas du silicium multi-cristallin) aux orientations différentes ainsi que de leurs joints, aux propriétés jusque-là mal connues, mais aussi les gradients de contrainte ou de densités de dislocations, les concentrations en précipités d'impuretés variables entre le haut et le bas du lingot, ainsi qu'entre ses bords et son centre. Ces variations étendues modifient les propriétés mécaniques du matériau, et de facto sa sciabilité.

Compte tenu de ces inhomogénéités, il est actuellement difficile, voire impossible, de définir des paramètres de coupe adaptés localement au matériau découpé permettant de réduire l'usure du fil et aussi ses risques de rupture.

D'autres procédés d'usinage sont soumis aux problèmes d'usure de l'outil, notamment les meules.

Il a été observé que l'usure des meules a pour conséquence une augmentation des efforts de coupe [1].

L'augmentation de l'effort de coupe avec l'usure du fil a également été observée dans le cas de la découpe au fil diamanté [2].

Cependant, cette relation générale n'est pas à elle seule exploitable pour réduire l'endommagement du fil, ni pour adapter le procédé à la résistance variable présentée par le matériau.

Le document US 2008/0065257 [3] propose d'asservir le fonctionnement d'une machine d'usinage (notamment le débit de matière usinée) sur les efforts de coupe.

Cependant, ce procédé n'est pas adapté pour gérer en temps réel la vitesse d'usure d'un fil et ne permet pas non plus d'optimiser la découpe filaire en fonction des propriétés mécaniques du matériau à découper.

En effet, la découpe filaire, qu'elle soit à deux ou trois corps, présente des problématiques techniques spécifiques, différentes de celles rencontrées avec les outils d'usinage dit standards (meule, fraiseuse...) :

- Durant un procédé de découpe, un fil tend naturellement à se déformer lorsqu'il rentre dans la matière. Cette déformation dépend de paramètres tels que l'usure du fil, la lubrification et/ou le débit de particules abrasives ainsi que la résistance locale du matériau à l'abrasion. La relation entre les vitesses réelles de coupes et les paramètres du procédé en devient non linéaire et donc plus difficile à appréhender.
- La découpe filaire répond à une problématique de création de surfaces dans un matériau donné, et non d'ôter un volume souhaité ou de rectifier une forme comme c'est le cas dans la plupart des autres modes d'usinage.
- Dans le cas des fils à abrasifs liés, l'usure est sensiblement impactante à l'échelle d'une coupe et en devient une problématique de premier ordre, contrairement à celle des outils tels qu'une fraise ou un outil de tour. De plus, le mode d'usure d'un fil à abrasif lié est d'une nature différente puisqu'elle est due à un arrachement et/ou à la fracture des diamants et non à l'émoussement d'une arête de coupe.

Les enjeux techniques de la découpe filaire sont donc distincts de ceux des autres modes d'usinage.

Le document CH 696 757 [4] qui est considéré comme l'état de la technique le plus proche de la revendication indépendante 1 divulgue un procédé de découpe filaire d'un matériau comprenant une boucle d'asservissement d'un paramètre de coupe, tel que la vitesse d'avance ou la vitesse du fil, par un paramètre dit de contrôle. Les paramètres de contrôle envisagés dans [4] sont : la force d'appui de la pièce à scier contre le fil (paramètre noté P(z)), la pression exercée par la pièce à scier sur un fil (paramètre F(z)), ou le taux d'enlèvement de matière (paramètre V(z)) qui est proportionnel au produit de la pression P(z) exercée par la pièce à scier sur le fil et de la vitesse longitudinale du fil.

Le document CH696757 divulgue aussi un dispositif selon le préambule de la revendication indépendante 12. Cependant, cet asservissement ne prend pas en compte le fléchissement du fil au cours de la découpe. Or, ce fléchissement peut influer sur la qualité de la découpe et sur le risque de rupture du fil.

Un but de l'invention est de permettre l'optimisation de la vitesse de découpe en fonction de l'usure du fil et de la résistance à l'abrasion présentée par le matériau, notamment lorsque celui-ci est inhomogène.

Un but de l'invention est donc de concevoir un procédé de découpe filaire (par fil à abrasif lié ou par slurry) d'un matériau qui permette de réduire les risques de rupture du fil et en particulier d'augmenter la durée de vie du fil, dans le cas d'un fil à abrasif lié.

**BREVE DESCRIPTION DE L'INVENTION**

Conformément à l'invention, il est proposé un procédé de découpe filaire d'un matériau, dans lequel on fait avancer un fil de découpe dans ledit matériau en entraînant ledit fil en défilement de sorte à découper progressivement le matériau, ledit procédé étant caractérisé en ce qu'il comprend :

- la mesure d'un effort appliqué par le fil sur ledit matériau en fonction du temps,
- la mesure de l'avancée du fil dans ledit matériau en fonction du temps,
- la détermination, à partir dudit effort et de ladite avancée du fil, d'une grandeur caractérisant l'état de coupe filaire et,
- l'asservissement d'au moins un paramètre de découpe par l'évolution de ladite grandeur de sorte à diminuer la vitesse d'usure du fil et/ou à réduire le risque de rupture du fil.

La découpe au fil par électroérosion n'est pas concernée par la présente invention.

Dans le présent texte, on entend par « usure du fil » la perte de ses propriétés abrasives.

Par « usure du matériau », on entend l'enlèvement de matière par abrasion du matériau découpé.

Par « avancée du fil » on entend le rapport entre la section découpée et la durée de l'opération de découpe exprimée, soit linéairement par da/dt, soit par le rapport entre la vitesse de création surfacique dS/dt.

Selon un mode de réalisation, l'avancée du fil est déterminée par le rapport da/dt, où a est la position du fil par rapport à l'un des bords du matériau au cours du temps.

Dans ce cas, la grandeur EF caractérisant l'état de coupe répond à la formule suivante :

$$EF = \frac{L}{Fu}\frac{da}{dt}$$

où :

L est la largeur du matériau à découper,
F est l'effort mesuré, selon la direction du fil ou, de manière préférée selon la direction du support du matériau,
u est la vitesse de défilement du fil.

Selon une forme d'exécution de l'invention, l'avancée du fil est donnée par la formule :

$$\frac{da}{dt} = V - \frac{dy_0}{dt}$$

où V est la vitesse d'un système cinématique de guidage du fil par rapport au matériau et $y_0$ est la différence de position du fil sur un bord du matériau par rapport audit système cinématique de guidage filaire.

Selon un mode de réalisation, l'avancée du fil est déterminée par la vitesse de création surfacique dS/dt, où S est la surface créée par la découpe dans le matériau au cours du temps.

Dans ce cas, la grandeur EF caractérisant l'état de coupe répond à la formule suivante :

$$EF = \frac{1}{F\,u}\frac{dS}{dt}$$

où :

- F est l'effort mesuré,
- u est la vitesse de défilement du fil.

Selon une forme d'exécution de l'invention, l'avancée du fil est donnée par la formule :

$$\frac{dS}{dt} = LV - L\frac{dy_0}{dt}\left(1 + \frac{L}{6l}\right)$$

Où:

- $y_0$ est la déflexion du fil sur un bord du matériau dans le référentiel du système cinématique de guidage filaire,
- L est la largueur du matériau,
- l est la distance entre le bord du matériau et le centre de rotation des poulies dans une direction parallèle au fil.

De manière avantageuse, le matériau est un matériau semi-conducteur tel que du silicium et/ou du saphir.

Selon une forme d'exécution de l'invention, le fil de découpe est un fil à abrasif lié.

Ledit au moins un paramètre de découpe asservi par l'évolution de ladite grandeur EF caractérisant l'état de coupe est choisi parmi la vitesse de défilement du fil, la vitesse d'avancée du fil dans le matériau et le renouvellement du fil.

De manière avantageuse, le procédé comprend en outre l'asservissement du débit de distribution d'un lubrifiant, de la tension du fil et/ou de l'accélération du fil par l'évolution de ladite grandeur EF caractérisant l'état de coupe.

De préférence, si la grandeur EF mesurée devient inférieure à un seuil prédéterminé, la présence d'une région de résistance à l'abrasion supérieure est détectée dans le matériau 200 et l'asservissement comprend la réduction de la vitesse d'avancée et/ou l'augmentation de la vitesse de défilement du fil 102 tant que la grandeur EF mesurée reste inférieure audit seuil.

Inversement, si la grandeur EF mesurée devient supérieure à un plafond prédéterminé, la présence d'une région de résistance à l'abrasion inférieure est détectée dans le matériau 200 et l'asservissement comprend l'augmentation de la vitesse d'avancée 102 tant que la grandeur EF reste supérieure audit plafond.

Selon une autre forme d'exécution de l'invention, le fil de découpe est lisse et l'abrasion est réalisée par un mélange de découpe comprenant des grains abrasifs dispersés dans un liquide, ledit mélange étant dispensé entre le fil et le matériau à découper.

De préférence, ledit au moins un paramètre de découpe asservi est choisi parmi le débit et/ou la vitesse de renouvellement du mélange de découpe.

De manière avantageuse, le procédé comprend en outre l'asservissement de la vitesse de défilement du fil, de la vitesse d'avancée du fil et/ou la tension du fil par l'évolution de ladite grandeur EF caractérisant l'état de coupe.

Un autre objet concerne un dispositif de découpe filaire d'un matériau, comprenant :

- un support pour ledit matériau,
- au moins un fil de découpe,
- un système cinématique de guidage du fil, comprenant au moins deux poulies agencées pour guider ledit fil pendant la découpe du matériau,
- un système de contrôle adapté pour commander la vitesse de défilement du fil et la vitesse d'avancée du fil dans le matériau.

Ledit dispositif est caractérisé en ce qu'il comprend :

- un dispositif de mesure d'un effort appliqué par le fil de découpe sur le matériau, comprenant au moins un capteur de force, préférentiellement à jauge,

- un dispositif de mesure de l'avancée du fil,
- un système de traitement configuré pour :

  • déterminer, à partir de l'effort et de l'avancée du fil mesurés, une grandeur caractérisant l'état de coupe filaire,
  • surveiller l'évolution de ladite grandeur en fonction du temps,
  • transmettre au système de contrôle une consigne d'asservissement d'au moins un paramètre de découpe par l'évolution de ladite grandeur, de sorte à diminuer la vitesse d'usure du fil et/ou réduire le risque de rupture du fil.

Selon un mode de réalisation, ledit au moins un capteur de force est agencé contre le support du matériau, à l'opposé du fil de découpe ou sur le système cinématique de guidage du fil.

Le dispositif de mesure de l'avancée du fil peut également comprendre un dispositif optique, préférentiellement infrarouge, si le matériau à découper est transparent aux longueurs d'onde correspondantes.

De manière alternative ou complémentaire, le dispositif de mesure de l'avancée du fil comprend au moins un capteur de position, optionnellement laser, capacitif et/ou préférentiellement inductif.

## BREVE DESCRIPTION DES DESSINS

D'autres caractéristiques et avantages de l'invention ressortiront de la description détaillée qui va suivre, en référence aux dessins annexés sur lesquels :

- les figures 1A à 1C représentent schématiquement les différentes étapes de découpe de silicium pour application photovoltaïque ;
- la figure 2 illustre de manière schématique un mode de réalisation d'un dispositif de découpe filaire,
- la figure 3 illustre de manière schématique un autre mode de réalisation d'un dispositif de découpe filaire,
- la figure 4 présente de manière schématique le procédé d'asservissement ;
- la figure 5 illustre l'évolution de la grandeur caractérisant l'état de coupe au fil au cours de la découpe d'un matériau homogène. ;
- la figure 6 illustre l'effet d'un renouvellement de fil sur la grandeur caractérisant l'état de coupe pendant un procédé de coupe en régime dit de « back & forth ;
- la figure 7 illustre l'évolution de la grandeur caractérisant l'état de coupe au fil au cours de la coupe d'un matériau présentant une hétérogénéité.

## DESCRIPTION DETAILLEE DE L'INVENTION

### Dispositif de découpe

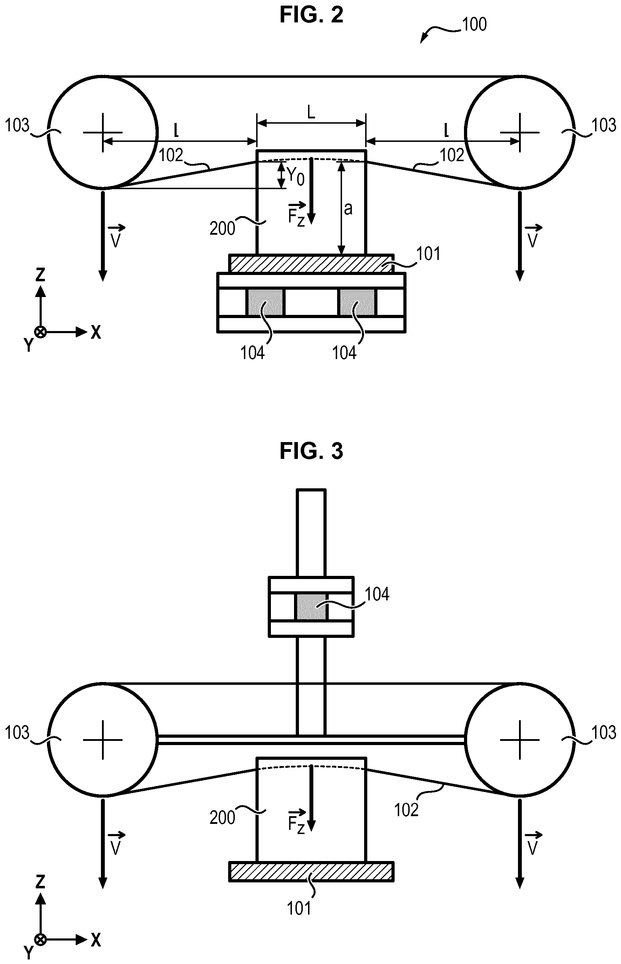

La figure 2 illustre de manière schématique un mode de réalisation d'un dispositif de découpe filaire.

Ledit dispositif 100 comprend un support 101 pour positionner et, le cas échéant, maintenir le matériau 200 à découper, qui est ici représenté sous la forme d'un bloc parallélépipédique.

Il va cependant de soi que le matériau à découper peut présenter une autre forme sans pour autant sortir du cadre de l'invention.

Sans que l'invention soit limitée à ces matériaux, le matériau 200 à découper est avantageusement du silicium, en particulier du silicium pour application photovoltaïque, du quartz ou du saphir.

Le matériau 200 est découpé au moyen d'au moins un fil de découpe 102 qui est entraîné en défilement dans une direction parallèle au trait de coupe.

Dans l'exemple illustré ici, le fil 102 forme une boucle entourant deux poulies 103 appartenant au système de guidage filaire qui sont agencées pour guider le fil pendant la découpe du matériau.

Ce mode de réalisation n'est cependant pas limitatif et, dans une variante de réalisation, le fil peut être libre, c'est-à-dire qu'il ne forme pas une boucle mais est successivement déroulé du côté de l'une des poulies tout en étant rembobiné du côté de l'autre poulie, de sorte à effectuer un mouvement de va-et-vient entre les dites poulies.

Par ailleurs, le fil de découpe n'est pas nécessairement unique ; comme on le verra plus bas, l'invention s'applique en effet également à une nappe de fil, c'est-à-dire à un ensemble de brins qui découpent simultanément le matériau, dans un objectif de productivité du procédé de découpe.

Lesdits brins peuvent être constitués de plusieurs boucles ou bien d'un fil unique enroulé sur deux bobines et présentant plusieurs brins en contact avec le matériau à découper.

Le nombre de poulies ou guide fil 103 n'est pas limité à deux comme illustré ici mais peut être adapté par l'homme du métier.

Les poulies sont portées par un dispositif cinématique (non représenté) qui permet de les faire avancer au fur et à mesure de la découpe du matériau, permettant ainsi de faire avancer le fil dans le matériau. Ce dispositif ainsi que les poulies 103 est appelé système cinématique de guidage filaire. Ce mode de réalisation n'est également pas limitatif, le système de guidage filaire pouvant être fixe et le support du matériau guidé réciproquement vers le fil au moyen d'un système cinématique approprié.

De manière conventionnelle, le matériau est découpé selon une direction verticale (c'est-à-dire selon l'axe z) et du haut vers le bas.

A cet effet, le système cinématique de guidage filaire comprenant les poulies 103 est entraîné en translation du haut vers le bas.

Le vecteur vitesse $\vec{V}$ d'avancée relative des poulies 103 par rapport au matériau 200 est représenté sur les figures 2 et 3.

Selon un mode de réalisation, le fil 102 est un fil à abrasif lié, par exemple un fil comprenant une âme dont la surface est couverte d'une pluralité de grains abrasifs tels que des diamants.

Les grains abrasifs peuvent être solidarisés à l'âme du fil au moyen d'un matériau liant.

Parmi les matériaux liants adaptés pour cet usage, on peut citer des métaux (tels que le nickel ou le cuivre), des polymères, ou tout autre matériau assurant la tenue des grains abrasifs.

Le diamètre du fil peut être très varié, mais peut typiquement être compris entre 60 $\mu$m et 2 mm.

Ainsi, pour la découpe de plaques (« wafers ») de silicium pour application photovoltaïque, le diamètre du fil est de préférence compris entre 80 $\mu$m et 180 $\mu$m, de manière encore préférée entre 100 $\mu$m et 160 $\mu$m.

Pour l'éboutage et le briquetage, le diamètre du fil est typiquement compris entre 250 $\mu$m et 700 $\mu$m.

Un lubrifiant est distribué entre le fil 102 et le matériau 200 au moyen d'un dispositif adéquat (non illustré).

De manière connue en elle-même, le lubrifiant est un fluide tel que de l'eau, du polyéthylène-glycol (PEG), un gel, etc.

Selon une autre forme d'exécution de l'invention, le fil est lisse, l'abrasion étant réalisée par un « slurry », c'est-à-dire un mélange de découpe comprenant des grains abrasifs dispersés dans un liquide.

Le dispositif comprend alors un dispositif (non représenté ici) de distribution dudit mélange de découpe entre le fil 102 et le matériau 200.

Par ailleurs, le dispositif 100 comprend un système de contrôle adapté pour commander les paramètres de découpe, incluant la vitesse de défilement du fil et la vitesse d'avancée du système de guidage filaire par rapport au matériau à couper.

La vitesse de défilement et la vitesse d'avancée sont en effet des paramètres de découpe qui influent sur la performance de coupe et sur l'usure du matériau.

Comme on le verra plus bas, l'invention procure un asservissement d'au moins un paramètre de coupe de sorte à diminuer la vitesse d'usure du fil, ajuster le rapport entre la vitesse de découpe et l'usure du fil, ou réduire le risque de rupture du fil.

A cet effet, le dispositif 100 comprend en outre un dispositif de mesure d'un effort appliqué par le fil de découpe 102 sur le matériau 200.

On mesure l'effort F(t) exercé par le fil 102 en fonction du temps dans la direction normale au fil (axe z du repère illustré sur la figure 2) et/ou dans la direction tangente au fil (axe x du repère illustré sur la figure 2).

De préférence, on mesure l'effort de coupe selon l'axe z. On parlera donc dans la suite du texte d'effort normal $F_z$.

De manière avantageuse mais optionnelle, on utilise également une mesure selon l'axe x et/ou une mesure selon l'axe y.

L'effort $F_x$ selon l'axe x correspond sensiblement exclusivement aux frottements mis en jeu.

D'après la loi de Coulomb, celui-ci est donc proportionnel à la force normale $F_z$ et aura une évolution semblable. $F_x$ porte donc quasiment la même information que $F_z$.

Plus précisément, à partir de la mesure de l'effort selon l'axe x, il est possible de déterminer la force normale $F_z$ en connaissant le coefficient de frottement entre le fil et le matériau dans les conditions de coupe.

Enfin, la détermination de l'effort selon l'axe y est secondaire.

Elle permet d'identifier des déviations latérales du fil et/ou la présence de vibrations.

Pour mesurer ledit effort de coupe, on utilise un ou plusieurs capteurs de force.

Dans le cas d'un capteur unique, celui-ci est avantageusement placé au droit du trait de coupe, c'est-à-dire dans un plan parallèle à l'axe z et passant par le trait de coupe.

Dans le cas d'une pluralité de capteurs, ceux-ci peuvent avantageusement être disposés au droit du trait de coupe ou sur l'ensemble de la surface du matériau à couper.

Dans le mode de réalisation de la figure 2, deux capteurs 104 sont avantageusement disposés sous le matériau 200, du côté opposé à l'entrée du fil 102 dans le matériau.

Dans le mode de réalisation de la figure 3, un capteur 104 est agencé sur le système cinématique de guidage filaire comprenant les poulies 103.

Le ou les capteurs du dispositif de mesure d'effort peuvent être directement sensibles à la force (comme par exemple un capteur piézoélectrique) ou être basés sur la mesure de déplacements permettant d'en déduire la force.

Les capteurs piézoélectriques (notamment à quartz) offrent une grande longévité, un faible encombrement, une grande précision et une large plage de mesure qui sont adaptés à l'invention.

Cependant, les signaux mesurés par une telle technologie peuvent souffrir d'une dérive intrinsèque qui rend ces capteurs moins adaptés à des mesures sur des coupes longues.

Les capteurs piézoélectriques peuvent donc être utilisés pour des mesures de courte durée (inférieure à 30 minutes, préférentiellement inférieure à 5 min), éventuellement reproduites durant la coupe.

Pour des asservissements sur de longues durées, on utilise de préférence un ou plusieurs capteurs à jauges de contrainte, non sujets à ce dernier phénomène.

Lesdits capteurs seront choisis avec des fréquences de résonances distinctes des vibrations caractéristiques de l'équipement.

D'autre part, selon l'invention, on mesure l'évolution de la pénétration du fil dans le matériau à découper.

Il est donc nécessaire d'intégrer au dispositif de coupe un dispositif de mesure de l'avancée du fil dans le matériau.

L'avancée du fil permet de tenir compte de la déflexion du fil au cours de la découpe du matériau. Cette déflexion résulte de la combinaison de nombreux paramètres incluant le diamètre du fil, sa rigidité, la largeur du matériau à scier, la tension du fil, l'écart entre les guide-fils, la force entre le fil et le matériau, la vitesse de la table, la vitesse du fil, la capacité des abrasifs à abraser de la matière et la lubrification.

Ainsi, l'avancée du fil est inférieure à l'avancée du système de guidage filaire ou du support du matériau. En particulier, la différence entre l'avancée du fil et celle du support (dans le cas où c'est le support du matériau qui est déplacé vers le fil) n'est pas négligeable, singulièrement en début de coupe, et peut être de plus d'un centimètre pour une distance de coupe de 15 cm.

Cette déflexion ayant une influence significative sur la qualité des surfaces découpée et sur le risque de rupture du fil, la mesure de l'avancée du fil permet un asservissement plus fin des paramètres de coupe.

L'avancée du fil peut être définie par la vitesse $da/dt$, a étant la position du fil à l'un des bords du matériau (cf. figure 2). a est par exemple la distance entre la base du matériau reposant sur le support 101 et la position du fil sur un bord du matériau perpendiculaire à ladite base.

Plusieurs solutions techniques existent pour mesurer la vitesse $da/dt$ :

- mesure du décalage de position du fil $y_0$ sur un bord du matériau par rapport au système cinématique de guidage filaire (cf figure 2).
  La détermination de l'avancée du fil nécessite alors la vitesse V du système cinématique de guidage filaire par rapport au matériau 200 :

$$\frac{da}{dt} = V - \frac{dy_0}{dt} \qquad (1)$$

  $y_0$ étant la différence de position du fil sur un bord du matériau par rapport au système cinématique de guidage filaire (cf figure 2), c'est-à-dire la différence entre la position théorique du fil s'il était tendu de manière rectiligne entre les deux poulies 103 et la position effective du fil, qui est plus haute en raison de la déflexion du fil imposée par le matériau.
  Cette solution est préférentielle dans le cas ou V est connu par l'instrumentation de la scie car elle nécessite une plage de mesure plus courte et procure une mise en place plus aisée.

- mesure de la position absolue du fil sur un bord du matériau par rapport à un point fixe dans le support du matériau 200, donnant directement $da/dt$.
  Cette solution est satisfaisante mais nécessite une plage de mesure de l'ordre de la hauteur du matériau et est soumise à une mise en place plus complexe.

Les capteurs de position peuvent être des capteurs inductifs, des capteurs capacitifs, des codeurs optiques, des palpeurs mécaniques, un dispositif vidéo, ...

Certains sont plus ou moins adaptés aux solutions énoncées précédemment selon leurs plages de mesure et l'homme du métier tiendra compte des caractéristiques de ces différents capteurs pour choisir le(s) capteur(s) à mettre en oeuvre.

De manière préférentielle, l'avancée du fil est définie par la vitesse de création surfacique $dS/dt$, S étant la surface créée par la découpe à un instant t. Cette mesure peut s'effectuer de deux façons :

- Directe, par mesure de la déflexion réelle du fil dans le matériau. Ceci est possible uniquement pour les matériaux transparents à un certain spectre comme le verre, du quartz, du saphir ou le silicium (transparent aux IR). Cette mesure nécessite donc un dispositif vidéo.

- Indirecte, par extrapolation d'une mesure de la position du fil sur un bord du matériau telle qu'expliquée précédemment. La surface créée peut en effet être déterminée par la formule suivante dans le cas d'un système symétrique :

$$\frac{dS}{dt} = LV - L\frac{dy_0}{dt}\left(1 + \frac{L}{6l}\right) \qquad (2)$$

$y_0$ étant la déflexion du fil sur un bord du matériau dans le référentiel du système cinématique de guidage filaire,
L étant la largueur du matériau (par « largeur » on entend dans le présent texte la dimension du matériau parallèle au défilement du fil), et
$l$ étant la distance selon l'axe x entre le bord du matériau et le centre de rotation des poulies 103.

Le dispositif 100 comprend en outre au moins un dispositif de mesure de temps, tel qu'une horloge de manière à connaître l'évolution des précédentes grandeurs au cours du temps.
Par ailleurs, le dispositif comprend un système de traitement configuré pour :

- déterminer, à partir de l'effort et de l'avancée du fil mesurés, une grandeur EF caractérisant l'état de coupe, fonction de l'usure du fil, et/ou une résistance localisée à l'abrasion dudit matériau,
- surveiller l'évolution de ladite grandeur en fonction du temps,
- transmettre au système de contrôle une consigne d'asservissement d'au moins un paramètre de découpe par l'évolution de ladite grandeur, de sorte à diminuer la vitesse d'usure du fil, ajuster le rapport entre le rapport entre la vitesse de découpe et l'usure du fil, ou réduire le risque de rupture du fil.

Typiquement, ledit système de traitement inclut une chaîne d'acquisition reliant le dispositif de mesure d'effort et de temps à un processeur sur lequel est implémenté un algorithme de pilotage du dispositif de coupe.
Le système de traitement est relié au système de contrôle de sorte à lui transmettre des instructions concernant un ou plusieurs paramètres de coupe à ajuster en fonction de l'évolution du pouvoir d'abrasion.
La figure 3 illustre de manière schématique un autre mode de réalisation d'un dispositif de découpe filaire.
Il diffère de celui de la figure 2 par le fait que le dispositif de mesure d'effort est constitué d'un unique capteur de force 104 directement attaché au système cinématique de guidage du fil de découpe.

Qualification de l'état de coupe

Les inventeurs utilisent les mesures de l'avancée du fil ainsi que les mesures d'efforts de coupe pour établir une grandeur EF, appelée ici facteur d'efficacité ou « Efficiency Factor » (EF) caractérisant un état de coupe filaire.
Cette grandeur dépend donc en particulier de l'usure du fil et/ou de la résistance localisée à l'abrasion dudit matériau, ainsi que de la déflexion du fil.
La surveillance au cours du temps de la grandeur EF permet d'y asservir au moins un paramètre de coupe pour optimiser un procédé par rapport aux conditions globales et locales.
Cette grandeur apporte deux informations permettant d'ajuster le procédé de coupe :

- la caractérisation du pouvoir de coupe instantané du fil pour un matériau, donnant l'évolution de son usure. Cela donne d'une part une information précise sur le moment où le changement du fil est nécessaire, d'autre part un moyen de prolonger la durée de vie du fil en adaptant les paramètres de coupe (notamment par réglage automatique du mode « back & forth » pour les fils libres)
- un brusque changement de cette grandeur est synonyme d'un changement des caractéristiques mécaniques du matériau découpé. Les paramètres du procédé de coupe peuvent alors être ajustés optimiser la coupe (vitesse de défilement, cinématique et dynamique du fil par rapport au matériau).

On notera de manière annexe que la chute brutale à une valeur nulle de la mesure d'effort selon l'axe z est synonyme de rupture du fil en coupe, qui est une information non évidente sur les machines industrielles.
L'obtention des différentes informations (usure, résistance du matériau et rupture du fil) à partir du signal brut mesuré est permise par les différences des durées caractéristiques mises en jeu : l'usure est une évolution lente, tandis que le changement du matériau est rapide et/ou discontinu et que la rupture est très rapide, discontinue et quantifiée.
La surveillance de la grandeur EF permet donc d'optimiser les procédés de découpe en automatisant l'ajustement de la machine.

Les inventeurs ont montré qu'une forme avantageuse et pertinente de la grandeur EF peut s'écrire de la manière suivante :

$$EF = \frac{L}{F_z u} \frac{da}{dt} \tag{3}$$

- Avec L largeur du matériau 200
- $F_z$ l'effort normal appliqué par le fil 102 sur le matériau 200
- u la vitesse de glissement du fil
- da/dt l'avancée du fil en terme de vitesse d'évolution de la position du fil au bord du matériau définie précédemment.

Les inventeurs préconisent également une forme encore plus avantageuse et pertinente de la grandeur EF en utilisant l'avancée du fil en termes de vitesse de création surfacique :

$$EF = \frac{1}{F_z u} \frac{dS}{dt} \tag{4}$$

avec :

- $F_z$ l'effort normal appliqué par le fil 102 sur le matériau 200
- u la vitesse de glissement du fil
- dS/dt l'avancée du fil en terme de vitesse de création surfacique.

Cas d'une nappe de fils

Comme mentionné plus haut et illustré par exemple sur la figure 1A, un dispositif de découpe est souvent équipé pour une nappe de fils grâce à laquelle plusieurs brins découpent simultanément le matériau, afin de réaliser une découpe plus productive.

Dans ce cas, l'effort de coupe mesuré par le dispositif de mesure d'effort est en fait la somme des efforts appliqués par chacun des brins sur le matériau à découper.

Il est donc nécessaire dans cette situation de diviser la force mesurée par le nombre de brins actifs - considéré comme un paramètre du dispositif de coupe - pour obtenir l'effort qu'applique un seul brin.

L'avancée dans la matière de chaque brin peut par contre être considérée comme égale d'un brin à l'autre.

Il est également possible de multiplier cette avancée par le nombre de brins et de calculer la grandeur EF en considérant directement la force mesurée par le dispositif de mesure d'effort.

Ces deux techniques sont équivalentes à appliquer des formules analogues aux formules (3) et (4), où n est le nombre de brins formant la nappe et $F_z$ l'effort selon z mesuré par le dispositif de mesure :

$$EF = n \frac{L}{Fz} \frac{da}{dt} \tag{5}$$

$$EF = n \frac{1}{Fz} \frac{dS}{dt} \tag{6}$$

Cette grandeur donne une valeur moyenne de l'état d'usure de toute la nappe de fil.

Il est aussi possible d'avoir une valeur localisée de la grandeur EF en utilisant plusieurs mesures de l'avancée du fil avec plusieurs capteurs de position. La force par brins est par contre toujours prise en compte de la même manière.

Asservissement

L'asservissement repose sur le traitement des informations données par l'évolution de la grandeur EF au cours du temps.

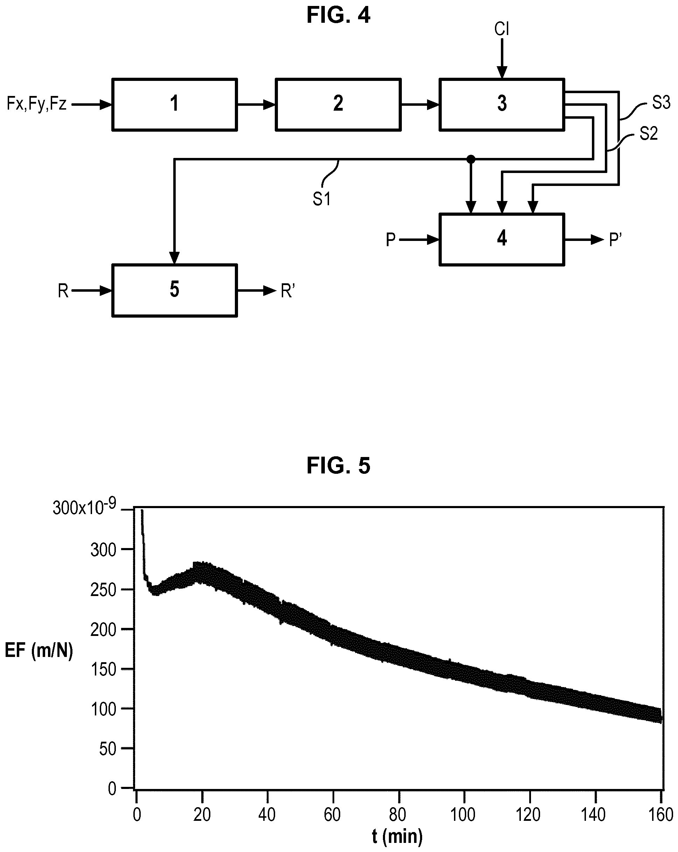

La figure 4 illustre de manière simplifiée le principe de l'asservissement.

Le bloc 1 concerne la mesure qui est mise en oeuvre par le dispositif de mesure d'effort comprenant au moins un capteur de force et par le dispositif de mesure de temps.

Le bloc 2 concerne l'acquisition desdites mesures et le transfert des données acquises à un processeur sur lequel est implémenté l'algorithme de pilotage.

Le bloc 3 concerne le traitement des données par l'algorithme de pilotage, la détermination de la grandeur EF et la déduction de phénomènes susceptibles d'influer sur l'usure ou le risque de rupture du fil.

Par ailleurs, l'algorithme de pilotage reçoit comme données d'entrée CI des consignes de l'opérateur et des informations sur la nature du matériau et du fil de coupe.

L'algorithme de pilotage peut fournir les données de sortie suivantes :

s1 : rupture ou non du fil
s2 : état d'usure du fil
s3 : résistance à l'abrasion du matériau.

Le bloc 4 concerne l'optimisation et l'adaptation des paramètres de découpe en tenant compte de ces données et des paramètres de coupe actuels. Ce bloc reçoit en entrée les paramètres de coupe actuels (notés P) et fournit en sortie les paramètres de coupes optimisés P'.

Cette opération est réalisée par une électronique de commande faisant partie du système de contrôle.

Enfin, le bloc 5 concerne la mise en oeuvre d'une alerte lorsque la rupture du fil est détecté. Par exemple, ce bloc transforme une information de rupture R initialement désactivée en une information de rupture R' activée si une rupture du fil est détectée.

A cet effet, le système de contrôle peut comprendre une interface utilisateur permettant d'afficher visuellement un signal d'alerte, un dispositif sonore ou tout autre moyen permettant d'informer un opérateur de la rupture du fil.

De manière avantageuse mais optionnelle, on utilise les mesures d'effort selon l'axe y pour déterminer les vibrations du dispositif de coupe et adapter en conséquence au moins un paramètre de coupe.

### Détection d'un fil usagé

Dans le cas d'un fil bouclé, la détection de l'instant où la grandeur EF passe un seuil d'usure préalablement défini en fonction de la nature du fil utilisé permet de déterminer l'instant où le fil doit être remplacé, par un opérateur ou de manière automatisée.

Typiquement, on peut considérer qu'un fil est hors d'usage si la grandeur EF est inférieure à 30 à 60% de sa valeur initiale. La figure 5 présente l'évolution de la grandeur EF en fonction du temps pour un procédé donné et ainsi un exemple d'évolution de l'usure d'un fil.

### Maîtrise de la longévité du fil

De manière avantageuse, l'asservissement peut être appliqué de manière à moduler la vitesse d'avancée du fil ainsi que sa vitesse de défilement pour contrôler ou réduire la vitesse de dégradation du fil en place.

Selon une forme d'exécution avantageuse de l'invention, cette modulation peut également concerner la lubrification, notamment par l'augmentation ou la diminution du débit d'arrosage en fonction du degré d'usure du fil.

Ces ajustements peuvent être faits à partir d'abaques d'évolution de la grandeur EF enregistrées au préalable.

A titre d'exemple, les inventeurs ont montré que la réduction de la vitesse de défilement du fil permet d'accroitre la longévité d'un fil à diamants incrustés.

Industriellement, l'optimisation des paramètres de découpe peut intégrer les coûts associés au temps de découpe (qui sont notamment fonction de la cadence souhaitée et de l'équipement utilisé) et le coût du fil, afin d'obtenir un compromis entre le nombre de pièces découpées et la durée d'utilisation d'un fil.

L'invention permet alors de maîtriser et de préserver la durée de vie du fil.

### Détection de la rupture du fil

Le dispositif permet également de détecter aisément la rupture du fil.

En effet, cette rupture se traduit par une soudaine chute de l'effort de coupe mesuré au voisinage de zéro.

Une modalité avantageuse de l'asservissement peut donc traiter cette information.

On peut alors commander un arrêt du dispositif de coupe (par exemple, un arrêt de la rotation des moteurs, etc.), et/ou remonter le dispositif de guidage supportant les poulies.

Cela permet d'éviter de provoquer des dégâts sur le matériau à découper et/ou sur le dispositif de découpe lui-même si celui-ci continuait de tourner à vide.

Régime de « back & forth »

Dans le cas des fils libres, on distingue deux régimes dits de « back & forth » (aller-retour).

Il existe en effet un régime d'aller-retour complet, c'est-à-dire que la même longueur de fil est débobinée d'un côté que rembobinée du côté opposé.

Dans ce cas, l'asservissement décrit plus haut pour les fils bouclés s'applique de manière similaire aux fils libres.

Il existe par ailleurs un régime d'aller-retour avec renouvellement partiel du fil, dans lequel une portion de fil est éliminée à chaque cycle et remplacée par une portion de fil neuf.

Dans cette configuration, on peut asservir la découpe de sorte à ajuster la quantité de fil éliminée en définissant comme consigne un intervalle de grandeur EF constant ou un intervalle d'effort de coupe constant.

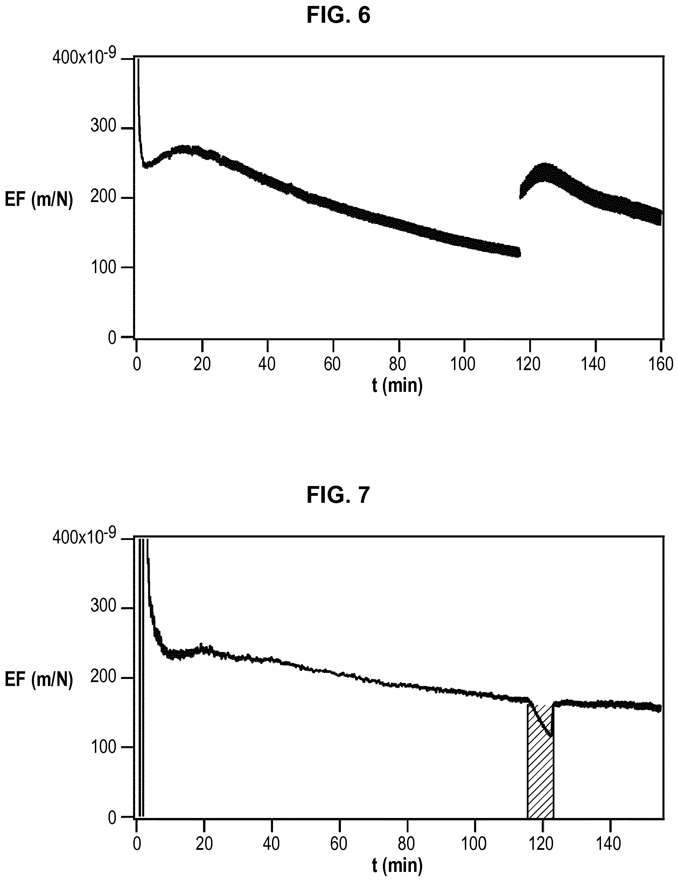

La figure 6 illustre le résultat d'un tel asservissement, où la grandeur EF évolue de manière cyclique entre deux bornes.

En effet, un renouvellement trop fréquent du fil induit une consommation excessive de fil.

A contrario, un trop faible renouvellement de fil (c'est-à-dire un remplacement trop peu fréquent ou d'une longueur insuffisante) conduirait à une diminution de la vitesse de coupe souhaitée.

Un asservissement consistant à ajuster le renouvellement du fil pour conserver une valeur moyenne EF constante sur un cycle (ou plusieurs cycles successifs représentatifs) permet donc une économie de fil tout en optimisant la capacité de coupe du dispositif.

Adaptation aux inhomogénéités du matériau découpé

L'adaptation des paramètres de coupe en fonction des caractéristiques mécaniques du matériau peut s'effectuer directement par le traitement de la mesure des efforts de coupes, notamment avec celui de la force normale au fil.

La figure 7 illustre ainsi un exemple de l'évolution de la grandeur EF, calculée selon l'une des formules (3) ou (4), pour un matériau inhomogène comprenant localement une zone présentant une résistance à l'abrasion plus élevée que la résistance moyenne du matériau, par exemple due à un précipité d'impuretés.

Lors de la rencontre du fil avec une telle zone plus résistante (représentée par la zone hachurée sur la figure 7), la grandeur EF diminue de façon nette.

Inversement, dans le cas (non illustré) où le matériau comprend localement une zone présentant une résistance à l'abrasion plus faible que la résistance moyenne du matériau, on observe sur la courbe de l'évolution d'EF en fonction du temps que cette grandeur augmente de façon nette.

Le dispositif est donc en mesure de détecter un changement des propriétés mécaniques du matériau découpé.

Dans une telle situation, l'asservissement permet de réduire, voire de stopper l'avancée des poulies, et d'augmenter la vitesse de défilement du fil afin que la force se réduise à nouveau pour revenir à une évolution de force attendue.

Ainsi, l'asservissement permet de soulager les sollicitations auxquelles le fil de coupe est soumis lors de la découpe d'un matériau hétérogène, réduisant ainsi son usure et son risque de rupture tout en optimisant la découpe.

Cas de la découpe filaire avec slurry

Bien que la description qui précède vise plus particulièrement la découpe filaire à abrasif lié, l'asservissement d'au moins un paramètre de coupe par le pouvoir d'abrasion peut également être mis en oeuvre dans la découpe filaire avec slurry.

Dans un tel cas, le fil est lisse tandis que des grains abrasifs sont dispersés dans un liquide de coupe, formant ainsi un mélange appelé « slurry », qui est distribué au niveau du trait de coupe.

Dans cette situation, l'asservissement permet de réguler le débit d'abrasif et ainsi d'optimiser la découpe.

Comme exposé précédemment, on mesure l'effort de coupe, l'avancée du fil, on détermine une grandeur EF caractérisant l'état de coupe, et on asservit au moins un paramètre de coupe.

Une diminution trop rapide de la grandeur EF peut être corrigée en augmentant le débit de slurry.

Une lente diminution de la grandeur EF (c'est-à-dire une diminution continue sur plusieurs heures) traduit une dégradation du slurry, principalement une réduction de la taille de grains abrasifs et/ou une augmentation de la proportion de copeaux du matériau découpé dans le liquide de coupe.

Il peut être remédié à cette situation en renouvelant le slurry.

**REFERENCES**

[1] K. Fathima ; A. Senthil Kumar ; M. Rahman ; H.S. Lim, A study on wear mechanism and wear réduction stratégies in grinding wheels used for ELID grinding, Elsevvier Science : Wear, Vol. 254, 2003

[2] W.I. Clark ; A.J. Shih ; R.L. Lemaster ; S.B. McSpadden, Fixed abrasive diamond wire machining - Part II: experiment design and results, International Journal of Machine Tools & Manufacture, ed. 43th, 2003

[3] J. He ; H. Zhang ; Z. Pan, Controlled material removal rate (CMRR) and self-tuning force control in robotic machining process, US Patent Application Publication, n°US 2008/0065257 A1, 2008

[4] CH 696 757

**Revendications**

1. Procédé de découpe filaire d'un matériau (200), dans lequel on fait avancer un fil de découpe (102) dans ledit matériau (200) en entraînant ledit fil en défilement de sorte à découper progressivement le matériau, ledit procédé étant **caractérisé en ce qu'**il comprend :

   - la mesure d'un effort (F) appliqué par le fil (102) sur ledit matériau (200) en fonction du temps,
   - la mesure de l'avancée du fil (102) dans ledit matériau (200) en fonction du temps,
   - la détermination, à partir dudit effort (F) et de ladite avancée du fil, d'une grandeur (EF) caractérisant l'état de coupe filaire et,
   - l'asservissement d'au moins un paramètre de découpe par l'évolution de ladite grandeur (EF) de sorte à diminuer la vitesse d'usure du fil et/ou à réduire le risque de rupture du fil.

2. Procédé selon la revendication 1, **caractérisé en ce que** l'avancée du fil est déterminée par le rapport da/dt, où a est la position du fil (102) par rapport à l'un des bords du matériau (200) au cours du temps, la grandeur (EF) caractérisant l'état de coupe répondant à la formule suivante :

$$EF = \frac{L}{Fu}\frac{da}{dt}$$

où :

   L est la largeur du matériau (200) à découper,
   F est l'effort mesuré,
   u est la vitesse de défilement du fil.

et l'avancée du fil étant donnée par la formule :

$$\frac{da}{dt} = V - \frac{dy_0}{dt}$$

où V est la vitesse d'un système cinématique de guidage du fil (102) par rapport au matériau (200) et $y_0$ est la différence de position du fil sur un bord du matériau par rapport audit système cinématique de guidage filaire.

3. Procédé selon la revendication 1, **caractérisé en ce que** l'avancée du fil est déterminée par la vitesse de création surfacique dS/dt, où S est la surface créée par la découpe dans le matériau (200) au cours du temps, la grandeur (EF) caractérisant l'état de coupe répondant à la formule suivante :

$$EF = \frac{1}{Fu}\frac{dS}{dt}$$

où :

   - F est l'effort mesuré,
   - u est la vitesse de défilement du fil.

et l'avancée du fil étant donnée par la formule :

$$\frac{dS}{dt} = LV - L\frac{dy_0}{dt}\left(1 + \frac{L}{6l}\right)$$

Où :

- $y_0$ est la déflexion du fil sur un bord du matériau dans le référentiel du système cinématique de guidage filaire,
- L est la largueur du matériau,
- $l$ est la distance dans une direction parallèle au fil (102) entre le bord du matériau et le centre de rotation des poulies (103).

4. Procédé selon l'une quelconque des revendications 1 à 3, **caractérisé en ce que** le matériau (200) est un matériau semi-conducteur tel que du silicium et/ou du saphir.

5. Procédé selon l'une des revendications 1 à 4, **caractérisé en ce que** le fil de découpe (102) est un fil à abrasif lié.

6. Procédé selon l'une des revendications 1 à 5, **caractérisé en ce que** ledit au moins un paramètre de découpe asservi par l'évolution de ladite grandeur (EF) caractérisant l'état de coupe est choisi parmi la vitesse de défilement du fil, la vitesse d'avancée du fil dans le matériau et le renouvellement du fil.

7. Procédé selon la revendication 6, **caractérisé en ce qu'**il comprend en outre l'asservissement du débit de distribution d'un lubrifiant, de la tension du fil et/ou de l'accélération du fil par l'évolution de ladite grandeur (EF) caractérisant l'état de coupe.

8. Procédé selon l'une des revendications 2 ou 3, **caractérisé en ce que** si la grandeur (EF) mesurée devient inférieure à un seuil prédéterminé, la présence d'une région de résistance à l'abrasion supérieure est détectée dans le matériau (200) et l'asservissement comprend la réduction de la vitesse d'avancée et/ou l'augmentation de la vitesse de défilement du fil (102) tant que la grandeur (EF) mesurée reste inférieure audit seuil.

9. Procédé selon l'une des revendications 2 ou 3, **caractérisé en ce que** si la grandeur (EF) mesurée devient supérieure à un plafond prédéterminé, la présence d'une région de résistance à l'abrasion inférieure est détectée dans le matériau (200) et l'asservissement comprend l'augmentation de la vitesse d'avancée (102) tant que la grandeur (EF) reste supérieure audit plafond.

10. Procédé selon l'une des revendications 1 à 9, **caractérisé en ce que** le fil de découpe (102) est lisse et **en ce que** l'abrasion est réalisée par un mélange de découpe comprenant des grains abrasifs dispersés dans un liquide, ledit mélange étant dispensé entre le fil (102) et le matériau (200) à découper, ledit au moins un paramètre de découpe asservi étant choisi parmi le débit et/ou la vitesse de renouvellement du mélange de découpe.

11. Procédé selon la revendication 10, **caractérisé en ce qu'**il comprend en outre l'asservissement de la vitesse de défilement du fil, de la vitesse d'avancée du fil et/ou la tension du fil par l'évolution de ladite grandeur (EF) caractérisant l'état de coupe.

12. Dispositif (100) de découpe filaire d'un matériau (200), comprenant :

- un support (101) pour ledit matériau,
- au moins un fil de découpe (102),
- un système cinématique de guidage du fil, comprenant au moins deux poulies (103) agencées pour guider ledit fil (102) pendant la découpe du matériau,
- un système de contrôle adapté pour commander la vitesse de défilement du fil et la vitesse d'avancée du fil dans le matériau,

ledit dispositif étant **caractérisé en ce qu'**il comprend :

- un dispositif de mesure d'un effort appliqué par le fil de découpe sur le matériau, comprenant au moins un capteur de force (104), préférentiellement à jauge,
- un dispositif de mesure de l'avancée du fil,
- un système de traitement configuré pour :

• déterminer, à partir de l'effort et de l'avancée du fil mesurés, une grandeur (EF) caractérisant l'état de coupe filaire,
• surveiller l'évolution de ladite grandeur (EF) en fonction du temps,
• transmettre au système de contrôle une consigne d'asservissement d'au moins un paramètre de découpe par l'évolution de ladite grandeur (EF), de sorte à diminuer la vitesse d'usure du fil et/ou réduire le risque de rupture du fil.

13. Dispositif selon la revendication 12, **caractérisé en ce que** ledit au moins un capteur de force (104) est agencé contre le support (101) du matériau (200), à l'opposé du fil de découpe (102) ou sur le système cinématique de guidage du fil.

14. Dispositif selon l'une des revendications 12 à 13, **caractérisé en ce que** le dispositif de mesure de l'avancée du fil comprend un dispositif optique, préférentiellement infrarouge.

15. Dispositif selon l'une des revendications 12 à 14, **caractérisé en ce que** le dispositif de mesure de l'avancée du fil comprend au moins un capteur de position, optionnellement laser, capacitif et/ou préférentiellement inductif.

**Patentansprüche**

1. Verfahren zum Drahtsägen eines Materials (200), wobei ein Sägedraht (102) in dem Material (200) durch Führen der Bewegung des Drahts derart, dass das Material nach und nach zerteilt wird, vorangetrieben wird, wobei das Verfahren **dadurch gekennzeichnet ist, dass** es umfasst:

   - das Messen einer Kraft (F), die von dem Draht (102) auf das Material (200) ausgeübt wird, in Abhängigkeit von der Zeit,
   - das Messen des Vortriebs des Drahts (102) in dem Material (200) in Abhängigkeit von der Zeit,
   - das Bestimmen, auf der Basis der Kraft (F) und des Vortriebs des Drahts, einer Größe (EF), welche den Stand des Drahtsägens anzeigt und,
   - das Einstellen von mindestens einem Sägeparameter durch Entwicklung der Größe (EF) derart, dass die Verschleißgeschwindigkeit des Drahts verringert und/oder das Bruchrisiko des Drahts reduziert werden.

2. Verfahren nach Anspruch 1, **dadurch gekennzeichnet, dass** der Vortrieb des Drahts von dem Verhältnis da/dt bestimmt ist, wobei a die Position des Drahts (102) im Verhältnis zu einem der Ränder des Materials (200) im Laufe der Zeit ist, wobei die Größe (EF), welche den Stand des Sägens kennzeichnet, der folgenden Formel entspricht:

$$ EF = \frac{L}{Fu}\frac{da}{dt} $$

wobei:

   L die Breite des zu sägenden Materials (200) ist,
   F die gemessene Kraft ist,
   u die Bewegungsgeschwindigkeit des Drahts ist,
   und der Vortrieb des Drahts gegeben wird von der Formel:

$$ \frac{da}{dt} = V - \frac{dy_0}{dt} $$

wobei V die Geschwindigkeit eines kinematischen Führungssystems des Drahts (102) im Verhältnis zum Material (200) ist und $y_0$ die Positionsdifferenz des Drahts auf einem Rand des Materials im Verhältnis zum kinematischen Drahtführungssystem ist.

3. Verfahren nach Anspruch 1, **dadurch gekennzeichnet, dass** der Vortrieb des Drahts von der Flächenerzeugungsgeschwindigkeit dS/dt bestimmt wird, wobei S die vom Sägen in dem Material (200) im Laufe der Zeit erzeugte Fläche ist, wobei die Größe (EF), die den Stand des Sägens kennzeichnet, der folgenden Formel entspricht:

$$EF = \frac{1}{Fu}\frac{dS}{dt}$$

wobei:

- F die gemessene Kraft ist,
- u die Bewegungsgeschwindigkeit des Drahts ist,

und der Vortrieb des Drahts gegeben wird von der Formel:

$$\frac{dS}{dt} = LV - L\,\frac{dy_0}{dt}\left(1 + \frac{L}{6l}\right)$$

wobei:

- $y_0$ die Ablenkung des Drahts auf einem Rand des Materials im Bezugssystem des kinematischen Drahtführungssystems ist,
- L die Breite des Materials ist,
- *l* der Abstand in einer zum Draht (102) parallelen Richtung zwischen dem Rand des Materials und dem Rotationszentrum der Rollen (103) ist.

4. Verfahren nach einem der Ansprüche 1 bis 3, **dadurch gekennzeichnet, dass** das Material (200) ein halbleitendes Material wie Silicium und/oder Saphir ist.

5. Verfahren nach einem der Ansprüche 1 bis 4, **dadurch gekennzeichnet, dass** der Sägedraht (102) ein Draht mit gebundenem Schleifmittel ist.

6. Verfahren nach einem der Ansprüche 1 bis 5, **dadurch gekennzeichnet, dass** der mindestens eine von der Entwicklung der Größe (EF), welche den Stand des Sägens kennzeichnet, geregelte Sägeparameter aus der Bewegungsgeschwindigkeit des Drahts, der Vortriebsgeschwindigkeit des Drahts in dem Material und der Erneuerung des Drahts ausgewählt ist.

7. Verfahren nach Anspruch 6, **dadurch gekennzeichnet, dass** es ferner die Reglung des Verteilungsdurchsatzes eines Schmiermittels, der Spannung des Drahts und/oder der Beschleunigung des Drahts durch die Entwicklung der Größe (EF) umfasst, die den Stand des Sägens kennzeichnet.

8. Verfahren nach einem der Ansprüche 2 oder 3, **dadurch gekennzeichnet, dass**, wenn die gemessene Größe (EF) unter einen vorher bestimmten Grenzwert fällt, die Anwesenheit einer Region mit höherer Abriebfestigkeit in dem Material (200) festgestellt wird und die Regelung die Reduzierung der Vortriebsgeschwindigkeit und/oder die Erhöhung der Bewegungsgeschwindigkeit des Drahts (102) umfasst, solange die gemessene Größe (EF) unter dem Grenzwert bleibt.

9. Verfahren nach einem der Ansprüche 2 oder 3, **dadurch gekennzeichnet, dass**, wenn die gemessene Größe (EF) größer als ein vorher bestimmter Höchstwert ist, die Anwesenheit einer Region mit niedrigerer Abriebfestigkeit in dem Material (200) festgestellt wird und die Regelung die Erhöhung der Vortriebsgeschwindigkeit (102) umfasst, solange die Größe (EF) höher als der Höchstwert bleibt.

10. Verfahren nach einem der Ansprüche 1 bis 9, **dadurch gekennzeichnet, dass** der Sägedraht (102) glatt ist und dass der Abrieb von einer Sägemischung durchgeführt wird, die in einer Flüssigkeit verteilte Abriebkörner umfasst, wobei die Mischung zwischen dem Draht (102) und dem zu sägenden Material (200) verteilt wird, wobei der mindestens eine geregelte Sägeparameter aus dem Durchsatz und/oder der Erneuerungsgeschwindigkeit der Sägemischung ausgewählt ist.

11. Verfahren nach Anspruch 10, **dadurch gekennzeichnet, dass** es ferner die Regelung der Bewegungsgeschwindigkeit des Drahts, der Vortriebsgeschwindigkeit des Drahts und/oder der Spannung des Drahts durch die Entwicklung der Größe (EF), die den Stand des Sägens umfasst, umfasst.

**12.** Vorrichtung (100) zum Drahtsägen eines Materials (200), umfassend:

- einen Halter (101) für das Material,
- mindestens einen Sägedraht (102),
- ein kinematisches Führungssystems des Drahts, umfassend mindestens zwei Rollen (103), die ausgebildet sind, um den Draht (102) während des Sägens des Materials zu führen,
- ein Steuersystem, das ausgebildet ist, um die Bewegungsgeschwindigkeit des Drahts und die Vortriebsgeschwindigkeit des Drahts in dem Material zu steuern,

wobei die Vorrichtung **dadurch gekennzeichnet ist, dass** sie umfasst:

- eine Vorrichtung zum Messen einer von dem Sägedraht auf das Material angewendeten Kraft, umfassend mindestens einen Kraftsensor (104), vorzugsweise mit Fühler,
- eine Vorrichtung zum Messen des Vortriebs des Drahts,
- ein Verarbeitungssystem, das konfiguriert ist, um:

  • auf der Basis der gemessenen Kraft und des gemessenen Vortriebs des Drahts eine Größe (EF) zu bestimmen, die den Stand des Drahtsägens kennzeichnet,
  • die Entwicklung der Größe (EF) in Abhängigkeit von der Zeit zu überwachen,
  • an das Steuersystem einen Regelungssollwert mindestens eines Sägeparameters durch die Entwicklung der Größe (EF) zu übermitteln, um die Verschleißgeschwindigkeit des Drahts zu verringern und/oder das Bruchrisiko des Drahts zu reduzieren.

**13.** Vorrichtung nach Anspruch 12, **dadurch gekennzeichnet, dass** der mindestens eine Kraftsensor (104) gegen den Halter (101) des Materials (200) gegenüber dem Sägedraht (102) oder auf dem kinematischen Führungssystem des Drahts ausgebildet ist.

**14.** Vorrichtung nach einem der Ansprüche 12 bis 13, **dadurch gekennzeichnet, dass** die Messvorrichtung des Vortriebs des Drahts eine optische Vorrichtung, vorzugsweise Infrarot, umfasst.

**15.** Vorrichtung nach einem der Ansprüche 12 bis 14, **dadurch gekennzeichnet, dass** die Messvorrichtung des Vortriebs des Drahts mindestens einen Positionssensor, optional Laser, kapazitiv und/oder vorzugsweise induktiv, umfasst.

**Claims**

**1.** A method for wire cutting a material (200), in which a cutting wire (102) is advanced in said material (200) by causing said wire to run so as to gradually cut the material, this method being **characterized in that** it comprises:

- measuring a force (F) applied by the wire (102) on said material (200) versus time,
- measuring the advance of the wire (102) in said material (200) versus time,
- determining, from said force (F) and from said advance of the wire, a quantity (EF) characterizing the wire cutting condition and,
- servo-controlling at least one cutting parameter to the time-dependent change of said quantity (EF) so as to decrease the wearing rate of the wire and/or reducing the risk of breaking the wire.

**2.** The method according to claim 1, **characterized in that** the advance of the wire is determined by the ratio da/dt, wherein a is the position of the wire (102) with respect to one of the edges of the material (200) versus time, the quantity (EF) characterizing the cutting condition fitting the following formula:

$$EF = \frac{L}{Fu}\frac{da}{dt}$$

wherein:

L is the width of the material (200) to be cut,

F is the measured force,
u is the running speed of the wire.

and the advance of the wire being given by the formula:

$$\frac{da}{dt} = V - \frac{dy_0}{dt}$$

wherein V is the velocity of a kinematic wire guiding system (102) with respect to the material (200) and $y_0$ is the difference in position of the wire on an edge of the material with respect to said kinematic wire guiding system.

3. The method according to claim 1, **characterized in that** the advance of the wire is determined by the surface generation rate dS/dt, wherein S is the surface generated by the cutting in the material (200) over time, the quantity (EF) characterizing the cutting condition fitting the following formula:

$$EF = \frac{1}{F\,u}\frac{dS}{dt}$$

wherein:

- F is the measured force,
- u is the running speed of the wire.

and the advance of the wire being given by the formula:

$$\frac{dS}{dt} = LV - L\frac{dy_0}{dt}\left(1 + \frac{L}{6l}\right)$$

Wherein:

- $y_0$ is the deflection of the wire on the edge of the material in the reference system of the kinematic wire guiding system,
- L is the width of the material,
- 1 is the distance in a direction parallel to the wire (102) between the edge of the material and the centre of rotation of the pulleys (103).

4. The method according to any one of claims 1 to 3, **characterized in that** the material (200) is a semiconducting material such as silicon and/or sapphire.

5. The method according to one of claims 1 to 4, **characterized in that** the cutting wire (102) is a wire with a bound abrasive.

6. The method according to one of claims 1 to 5, **characterized in that** said at least one cutting parameter servo-controlled to the time-dependent change of said quantity (EF) characterizing the cutting condition is selected from the running speed of the wire, the advance velocity of the wire in the material and the renewal of the wire.

7. The method according to claim 6, **characterized in that** it further comprises servo-control of the distribution flow rate of a lubricant, of the tension of the wire and/or of the acceleration of the wire to the time-dependent change of said quantity (EF) characterizing the cutting condition.

8. The method according to one of claims 2 or 3, **characterized in that** if the measured quantity (EF) becomes less than a predetermined threshold, the presence of a region with greater abrasion resistance is detected in the material (200) and the servo-control comprises the reduction in the advance speed and/or the increase in the running speed of the wire (102) as long as the measured quantity (EF) remains below said threshold.

9. The method according to one of claims 2 or 3, **characterized in that** if the measured quantity (EF) becomes greater than a predetermined upper limit, the presence of a region with lower abrasion resistance is detected in the material (200) and the servo-control comprises the increase in the advance speed (102) as long as the quantity (EF) remains above said threshold.

10. The method according to one of claims 1 to 9, **characterized in that** the cutting wire (102) is smooth and **in that** the abrasion is achieved by a cutting mixture comprising abrasive grains dispersed in a liquid, said mixture being dispensed between the wire (102) and the material (200) to be cut, said at least one servo-controlled cutting parameter being selected from among the flow rate and/or the renewal rate of the cutting mixture.

11. The method according to claim 10, **characterized in that** it further comprises servo-control of the running speed of the wire, of the advance speed of the wire and/or the tension of the wire to the time-dependent change in said quantity (EF) characterizing the cutting condition.

12. A device (100) for wire cutting a material (200), comprising:

- a support (101) for said material,
- at least one cutting wire (102),
- a kinematic system for guiding the wire, comprising at least two pulleys (103) laid out for guiding said wire (102) during the cutting of the material,
- a suitable control system for controlling the running speed of the wire and the advance speed of the wire in the material,

said device being **characterized in that** it comprises:

- a device for measuring a force (104) applied by the cutting wire onto the material,
- a device for measuring the advance of the wire,
- a processing system configured for:

• determining from the measured force and wire advance, a quantity (EF) characterizing the wire cutting condition,
• monitoring the time-dependent change in said quantity (EF) over time,
• transmitting to the control system an instruction for servo-controlling at least one cutting parameter to the time-dependent change in said quantity (EF) so as to decrease the wearing rate of the wire and/or reduce the risk of breaking the wire.

13. The device according to claim 12, **characterized in that** said at least one force sensor (104) is laid out against the support (101) of the material (200), opposite to the cutting wire (102) or on the kinematic wire guiding system.

14. The device according to one of claims 12 to 13, **characterized in that** the device for measuring the advance of the wire comprises an optical device, preferentially an infrared device.

15. The device according to one of claims 12 to 14, **characterized in that** the device for measuring the advance of the wire comprises at least one position sensor, optionally a laser, capacitive and/or preferentially inductive device.

**FIG. 1A**

**FIG. 1B**

**FIG. 1C**

## FIG. 2

## FIG. 3

## FIG. 4

## FIG. 5

# FIG. 6

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080065257 A
- CH 696757
- US 20080065257 A1

**Littérature non-brevet citée dans la description**

- **K. FATHIMA ; A. SENTHIL KUMAR ; M. RAHMAN ; H.S. LIM.** A study on wear mechanism and wear réduction stratégies in grinding wheels used for ELID grinding. *Elsevvier Science : Wear,* 2003, vol. 254
- Fixed abrasive diamond wire machining - Part II: experiment design and results. **W.I. CLARK ; A.J. SHIH ; R.L. LEMASTER ; S.B. MCSPADDEN.** International Journal of Machine Tools & Manufacture. 2003